# EUROPEAN PATENT APPLICATION

(11) **EP 4 607 155 A1**
(43) Date of publication of application: **27.08.2025**
(21) Application number: 24159652.7
(22) Date of filing: 26.02.2024
(51) Int. Cl.: G01F 1/075, G01F 15/14, G01F 5/00

(54) **A LIQUID FLOW MEASUREMENT DEVICE**

(71) Applicant: Husqvarna AB, 561 82 Huskvarna (SE)
(72) Inventor: Demmelmaier, Tobias, 89284 Pfaffenhofen an der Roth (DE); Steeger, Daniel, 89129 Öllingen (DE)
(74) Representative: Finkele, Rolf

(57) **Abstract**

A liquid flow measurement device **(100)** includes a housing **(200)** defining a liquid channel **(202),** which further defines an inlet **(204)** and an outlet **(206)** for a liquid flow. Further, an impeller housing **(208)** is defined by the housing **(200)** such that an impeller **(400)** is disposed within the impeller housing **(208).** The impeller **(400)** is adapted to rotate about an impeller axle **(402).** The impeller **(400)** extends in the liquid channel **(202)** up to a first length **(L1)** from the impeller axle **(402).** The liquid flow measurement device **(100)** is characterized in that the liquid flow measurement device **(100)** includes a partition wall **(224)** disposed within the liquid channel **(202)** such that the partition wall **(224)** is disposed at a second length **(L2)** from the impeller axle **(402)** such that the first length **(L1)** is smaller than or equal to the second length **(L2).** The partition wall **(224)** divides the liquid flow coming from the inlet **(204)** into a first part which is directed towards the impeller **(400),** and a second part which bypasses the impeller **(400).**

## Description

### TECHNICAL FIELD

The present disclosure relates to a liquid flow measurement device, particularly with an impeller.

### BACKGROUND

A liquid flow measurement device may be configured to be installed in pumps to measure the amount of liquid flowing therethrough and/or to measure the amount of liquid being consumed via one or more liquid distribution devices, for examples taps, fluidly connected directly or indirectly to the pumps.

Traditionally used liquid flow measurement devices in pumps, for example centrifugal pumps, include impeller and are relatively big in size to avoid pressure loss at higher flow rates. Further, relatively advanced liquid flow measurement devices use an external bypass system to divide a current of liquid in two different pipes. The main pipe may be used to keep the pressure loss at a minimum and the secondary pipe may be used to measure the flow rate. In this case mainly float-type flow measurement devices are used. However, the liquid flow measurement devices with external bypass system requires additions parts and sealings to divide the main pipe and the secondary pipe thereby requiring additional installation space within the pump.

An example of an improved liquid flow measurement device is provided in Chinese Patent CN 2,816,756 Y (hereinafter referred to as '756 reference). The '756 reference provides a flow meter that aims for a high measurement precision already at a small start-up flow rate exhibiting a small water stream resistance. To achieve this at least one guide vane in the form of a streamline plate extends from an upper wall surface on an inlet side of a water pipe towards an impeller cavity housing a measurement impeller to measure the water flow. A blade of the impeller causes an inlet channel to smoothly contract in shape and thus forms some sort of a nozzle at an inlet of the impeller cavity. A further guide blade is arranged at an outlet of the impeller cavity towards a water outlet thus forming a smooth expansion-shaped channel.

### SUMMARY OF THE INVENTION

In view of the above, it is an objective of the present invention to solve or at least reduce the drawbacks discussed above. The objective is at least partially achieved by a liquid flow measurement device.

According to an aspect of the present invention, the liquid flow measurement device comprises a housing defining a liquid channel. The liquid channel further defines an inlet and an outlet for a liquid flow. The liquid channel has a maximum cross-sectional area at either one of the inlet or the outlet. Further, an impeller housing is defined by the housing such that an impeller is disposed within the impeller housing. The impeller is adapted to rotate about an impeller axle such that the impeller at least partially extends in the liquid channel. The impeller extends in the liquid channel up to a first length from the impeller axle. The liquid flow measurement device is characterized in that the liquid flow measurement device further comprises a partition wall disposed within the liquid channel such that the partition wall is disposed at a second length from the impeller axle such that the first length is smaller than or equal to the second length. The partition wall divides the liquid flow coming from the inlet into a first part which is directed towards the impeller, and a second part which bypasses the impeller.

Thus, the present disclosure provides an improved liquid flow measurement device that advantageously includes an internal bypass system that may require a relatively small installation space and may further require reduced number of parts and sealings. The internal bypass system is formed within the housing, particularly the liquid channel. The internal bypass system includes the partition wall disposed within the liquid channel such that the partition wall divides the liquid flow coming from the inlet into the first part which is directed towards the impeller, and the second part which bypasses the impeller. Such an arrangement or design architecture of the internal bypass system may allow the liquid flow measurement device to accurately measure liquid flow at low liquid flow as well as do correct measurements at high liquid flow exhibiting minor pressure losses in both situations. This may in particular be important when dealing with low liquid pressure to not lower the low pressure further. Thus, the liquid flow measurement device may work well for a range of liquid flow. Further, there may be no need to divert the liquid from the liquid channel to the impeller and thus to cause a pressure loss as the impeller extends into the liquid channel.

The liquid channel defining an inlet and an outlet for a liquid flow according to the present invention may denote that the liquid channel is formed between the inlet and the outlet, wherein the outlet and the inlet are fluidly coupled with each other, and wherein the inlet is configured to allow an inflow of the liquid into the liquid channel, and the outlet is configured to allow an outflow of the liquid from the liquid channel.

According to an exemplary embodiment of the invention, the liquid may be water that is widely and commonly used for household and industrial applications. However, any other liquid may well be in the scope of the present invention.

According to an exemplary embodiment of the invention, the partition wall comprises an elongate structure defining a first end and a second end such that the first end is disposed opposite to the second end. Further, the first end is disposed towards the inlet of the liquid channel and the second end is disposed towards the impeller. The partition wall may have any other shape, size, and location in the liquid channel until the partition wall may be able to divide the liquid flow coming from the inlet into the first part which is directed towards the impeller, and the second part which bypasses the impeller.

According to an exemplary embodiment of the invention, the first end of the partition wall has a shape similar to a shape of the second end of the partition wall. The shape of the first end and the second of the partition wall may have any similar shape according to the application requirements.

According to an exemplary embodiment of the invention, the first end of the partition wall has the shape different from the shape of the second end of the partition wall. The second end of the partition wall may have the shape designed to increase a nozzle effect for the first part of the liquid flow which is directed towards the impeller. For example, the second end may have an inclined wedge like shape. However, the first end may have a flattish shape to provide least disturbance to the liquid flow inside the liquid channel.

According to an exemplary embodiment of the invention, the impeller axle is disposed along a central axis perpendicular to a longitudinal axis of the liquid channel. Further, the second end of the partition wall is disposed substantially beneath the central axis of the impeller axle. The impeller, particularly vanes of the impeller may face the liquid flow for better impact and precise measurement of the liquid flow.

According to an exemplary embodiment of the invention, the liquid flow measurement device further comprises a secondary partition wall disposed at a third length from the impeller axle such that the third length is smaller than the first length. The secondary partition wall may be provided within the liquid channel to substantially increase the nozzle effect for the first part of the liquid flow which is directed towards the impeller.

According to an exemplary embodiment of the invention, the secondary partition wall comprises an elongate structure having a length at least one-third the length of the partition wall. However, the secondary partition wall may have any shape, and size relative to the partition wall until the secondary partition wall may function to enhance the nozzle effect for the first part of the liquid flow which is directed towards the impeller.

According to an exemplary embodiment of the invention, the third length is two-third of the second length relative to the impeller axle. The secondary partition wall may be disposed substantially distant from the partition wall within the liquid channel to all flow of liquid therebetween. However, the distance between the secondary partition wall and the partition wall may be varied as per application requirement, and/ or the cross-section area of the liquid channel.

According to an exemplary embodiment of the invention, the partition wall and the secondary partition wall are disposed substantially parallel to the longitudinal axis of the liquid channel. However, the partition wall and the secondary partition wall may have any other orientation relative to each other without substantially interrupting the liquid flow therebetween.

According to an exemplary embodiment of the invention, the liquid flow measurement device is configured to measure the RPM of the impeller. The RPM of the impeller is measured with a magnet and a hall sensor disposed proximal to the impeller. Beside this measurement method there are several others, like optical methods, available to measure the RPM of an impeller. Thus dependent on the design of the overall system the one skilled in the art can choose from a variety of measurement methods that are most suitable in this respect.

According to an exemplary embodiment of the invention, the impeller housing is disposed at an offset to the longitudinal axis of the liquid channel. The impeller housing may be configured such that the impeller at least partially extends in the liquid channel to generate rotational energy from the liquid flowing in the liquid channel, particularly the first part of the liquid flow which is directed towards the impeller.

According to an exemplary embodiment of the invention, the liquid channel is surrounded by a body having an inlet wall defining the inlet and an outlet wall defining the outlet. The inlet wall forms a smooth contraction channel and further forms a nozzle for the first part of the liquid flow which is directed towards the impeller. The inlet wall may be configured to increase the velocity of the first part of the liquid flow for better functioning of the liquid flow measurement device.

According to an exemplary embodiment of the invention, the partition wall is disposed within the liquid channel such that the distance between the inlet wall and the partition wall is in a proportional relationship to the second length. The partition wall may be disposed substantially close to or relatively far from the inlet wall depending upon the size of the impeller housed in the impeller housing.

According to an exemplary embodiment of the invention, the liquid flow measurement device is formed by three plastic parts. The three plastic parts comprises the housing, the impeller, and a cover to shield the impeller in the housing. The liquid flow measurement device may advantageously be compact and may require less installation space.

According to a further aspect of the present invention, a pump, particularly a centrifugal pump, comprises a liquid flow measurement device. The liquid flow measurement device may be used to measure the liquid flow via the pump, or any other water transfer component used in industrial, or domestic applications, particularly gardening applications.

Before discussing the invention with the help of the drawings the invention will be briefly discussed in general. An internal bypass system may be provided to combine the advantages of having a bypass system and also the advantages of having less parts and sealings. In this case, a one-inch outlet of a centrifugal pump may be divided in a specified ratio by a partition wall inside the pump outlet. The first channel may be used to guide the main flow and to reduce the pressure loss at higher flow rates. The second channel may be used for the flow measurement with a small and optimized impeller. The RPM of the impeller may be measured with a magnet and a hall sensor. The overall design may be optimized to ensure a small installation space compared to other flow measurement devices within the same flow range.

The liquid flow measurement device according to the present invention may include the first channel and the second channel parallel to the first channel such that the pressure loss in two parallel channels are always the same, but the flow rate may divide accordingly. Therefore, the very low-pressure loss during low flow rates may nearly divide the flow rate according to the two different profiles of the channel. Further, at higher flow rates the impeller in the second channel may create a higher-pressure loss than the first channel. This may result in a relatively higher partial flowrate through the first channel. The measured curve may flatten for a certain amount, but it still may be possible to assign a certain RPM a certain flow rate. The advantage of this system may be the detection of relatively low flow rates by not increasing the pressure loss compared to the usage of a bigger impeller. Further, another advantage compared to other bypass solutions may be the relatively small installation space and the reduced number of parts and sealings. In total there are three plastic parts (housing, cover, impeller) and a single sealing (for maintenance) needed.

According to an exemplary embodiment of the invention, the liquid flow measurement device may include advantages of a regular bypass design with very compact dimensions and with less parts by having the internal bypass system inside the same piping system.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a perspective view of a liquid flow measurement device in accordance with an exemplary embodiment of the present disclosure;
**FIG. 2** illustrates an exploded view of the liquid flow measurement device in accordance with an exemplary embodiment of the present disclosure;
**FIG. 3** illustrates a cross-sectional view of the liquid flow measurement device in accordance with an exemplary embodiment of the present disclosure;

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

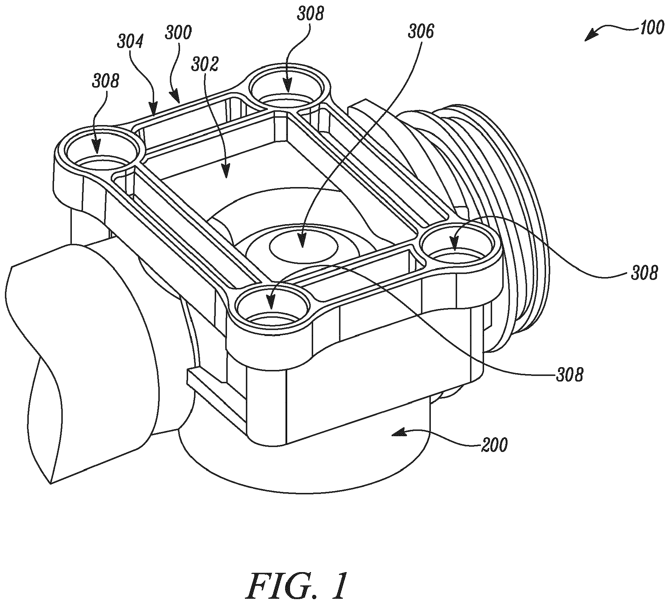

**FIG. 1** illustrates a perspective view of a liquid flow measurement device **100.** A pump, particularly a centrifugal pump, includes the liquid flow measurement device **100** of the present invention. The liquid flow measurement device **100** is formed preferably by plastic parts. The plastic parts includes a housing **200** and a cover **300** of the housing **200.** The cover **300** is configured to be mounted on the housing **200.** The cover **300** includes a body portion **302** and a first peripheral portion **304** surrounding the body portion **302.** The body portion **302** further includes a central portion **306** having a circular shape. Further, the first peripheral portion **304** has a substantial rectangular shape and includes a plurality of first mounting portions **308,** particularly four first mounting portions **308** to allow mounting of the cover **300** on the housing **200** using fasteners, particularly screw fasteners.

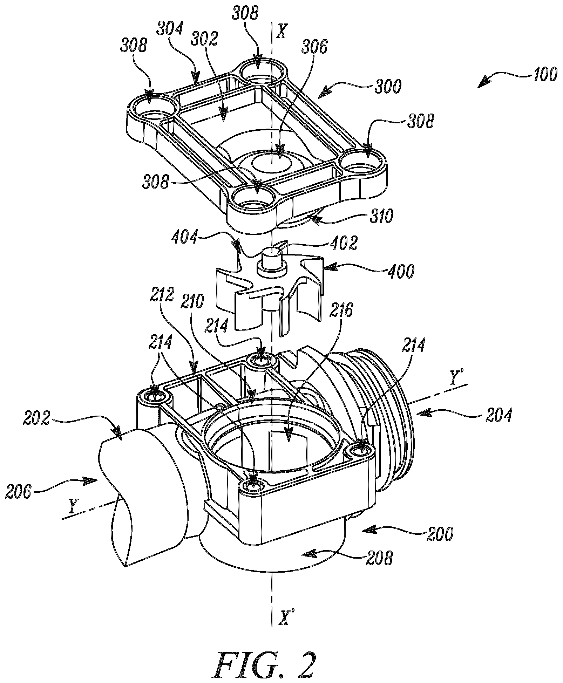

**FIG. 2** illustrates an exploded view of the liquid flow measurement device **100.** The liquid flow measurement device **100** is formed by three plastic parts. The three plastic parts includes the housing **200,** an impeller **400,** and the cover **300** to shield the impeller **400** in the housing **200.** In other words, the housing **200,** the impeller **400,** and the cover **300** are coupled to each other to form the liquid flow measurement device **100.** Further, the housing **200,** the impeller **400,** and the cover **300** are coupled to each other along a central axis **X-X'.**

With continuous reference to **FIG. 2****,** the liquid flow measurement device **100** includes the housing **200** defining a liquid channel **202.** The liquid channel **202** defines a longitudinal axis **Y-Y'.** The longitudinal axis **Y-Y'** of the liquid channel **202** is perpendicular to the central axis **X-X'.** The liquid channel **202** further defines an inlet **204** and an outlet **206** for a liquid flow. An impeller housing **208** is defined by the housing **200** such that the impeller **400** having a plurality of vanes **404** is disposed within the impeller housing **208.** The impeller **400** is disposed within the impeller housing **208** via an impeller opening **216.** The impeller housing **208** is defined along the central axis **X-X'.** The impeller housing **208** is disposed at an offset to the longitudinal axis **Y-Y'** of the liquid channel **202.** Further, the impeller **400** disposed in the impeller housing **208** is adapted to rotate about an impeller axle **402.** The impeller axle **402** is disposed along the central axis **X-X'** perpendicular to the longitudinal axis **Y-Y'** of the liquid channel **202.**

Further, the impeller housing **208** includes a second sealing seat **210** such that when the cover **300** together with a sealing (for example a O-ring sealing) is coupled to / or mounted on the housing **200** the impeller **400** disposed within the impeller housing **208** is shielded, the second sealing seat **210** of the impeller housing **208** engages via the sealing with the corresponding first sealing seat **310** of the central portion **306** of the cover **300** that at least partially extends into the impeller housing **208** via the impeller opening **216.** Further, the housing **200** includes a second peripheral portion **212** surrounding the impeller housing **208.** The second peripheral portion **212** has a substantially rectangular boundary. The second peripheral portion **212** is covered by the first peripheral portion **304** and the body portion **302** excluding the central portion **306** when the cover **300** is mounted on the housing **200.**

Further, the second peripheral portion **212** includes a plurality of second mounting portions **214,** particularly four second mounting portions **214** to allow mounting of the cover **300** on the housing **200** such that when the cover **300** is mounted on the housing **200,** the four first mounting portions **308** of the cover **300** align with the four second mounting portions **214** of the housing **200** and are coupled to each other using fasteners, particularly screw fasteners. In other words, the four first mounting portions **308** of the cover **300** and the four second mounting portions **214** of the housing **200** are through holes respectively that allow passage of the fasteners, particularly screw fasteners for allowing mounting of the cover **300** on the housing **200.**

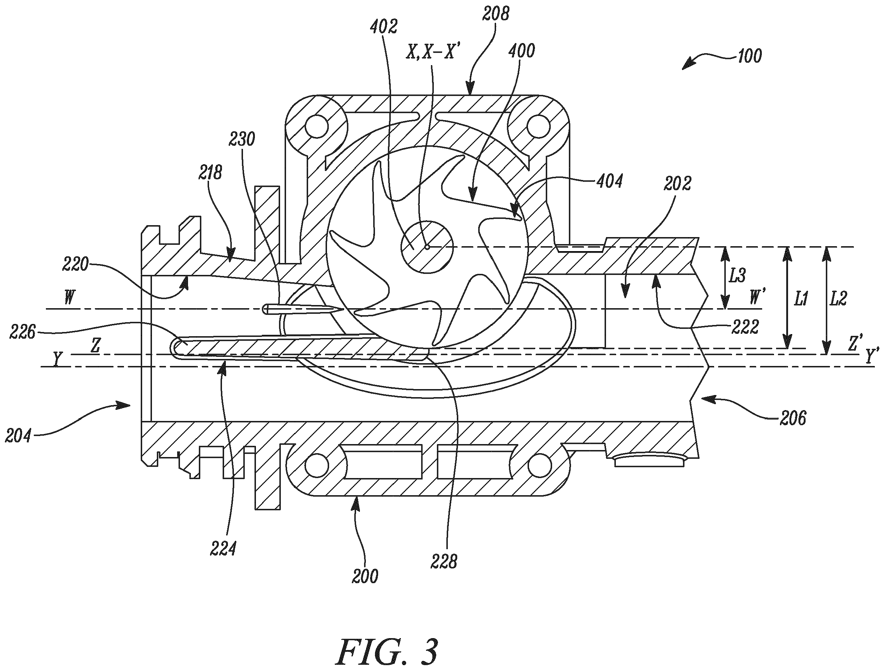

**FIG. 3** illustrates a cross-sectional view of the liquid flow measurement device **100.** The liquid flow measurement device **100** includes the housing **200** defining the liquid channel **202.** The liquid channel **202** defines the longitudinal axis **Y-Y'.** The liquid channel **202** further defines the inlet **204** and the outlet **206** for the liquid flow. The liquid channel **202** includes a body **218** having an inlet wall **220** defining the inlet **204** and an outlet wall **222** defining the outlet **206.** In other words, the wall proximal to the inlet **204** is the inlet wall **220** and the wall proximal to the outlet **206** is the outlet wall **222.** The liquid channel **202** has a maximum cross-sectional area at either one of the inlet **204** or the outlet **206.** As illustrated in **FIG. 3****,** the liquid channel **202** has the maximum cross-sectional area at the outlet **206** as the inlet wall **220** forms a smooth contraction channel whereas the outlet wall **222** forms a normal cylindrical channel.

Further, the housing **200** defines the impeller housing **208** such that the impeller **400** having the plurality of vanes **404** is disposed within the impeller housing **208.** The impeller **400** is adapted to rotate about the impeller axle **402** such that the impeller **400** at least partially extends in the liquid channel **202.** The impeller **400** extends in the liquid channel **202** up to a first length **"L1"** from the impeller axle **402,** particularly the center **X** of the impeller axle **402** disposed along the central axis **X-X'.** In other words, the impeller **400** has a diameter equal to the first length **"L1".**

With continuous reference to **FIG. 3****,** the liquid flow measurement device **100** further includes a partition wall **224** disposed within the liquid channel **202** such that the partition wall **224** is disposed at a second length **"L2"** from the impeller axle **402** such that the first length **"L1"** is smaller than the second length **"L2".** Further, the partition wall **224** is disposed within the liquid channel **202** such that the distance between the inlet wall **220** and the partition wall **224** is in a proportional relationship to the second length **"L2".**

Further, the partition wall **224** includes an elongate structure defining a first end **226** and a second end **228** such that the first end **226** is disposed opposite to the second end **228.** Further, the first end **226** is disposed towards the inlet **204** of the liquid channel **202** and the second end **228** is disposed towards the impeller **400.** Further, the first end **226** of the partition wall **224** has a shape selectively similar to a shape of the second end **228** of the partition wall **224,** or the first end **226** of the partition wall **224** has the shape different from the shape of the second end **228** of the partition wall **224.**

Further, the partition wall **224** defines a longitudinal axis **Z-Z'** such that the difference or depth between the longitudinal axis **Z-Z'** and the impeller axle **402,** particularly the center **X** of the impeller axle **402** is equal to the second length **"L2".** The longitudinal axis **Z-Z'** is substantially parallel to the longitudinal axis **Y-Y'** and substantially perpendicular to the central axis **X-X'.** Further, the second end **228** of the partition wall **224** is disposed substantially beneath the central axis **X-X'** of the impeller axle **402.**

Further, the partition wall **224** divides the liquid flow coming from the inlet **204** into a first part which is directed towards the impeller **400,** and a second part which bypasses the impeller **400.** In other words, the first part of the liquid flow flows above the partition wall **224** and the second part of the liquid flow flows below the partition wall **224.** Further, the inlet wall **220** forms a smooth contraction channel and further forms a nozzle for the first part of the liquid flow which is directed towards the impeller **400.**

With continuous reference to **FIG. 3****,** in an embodiment the liquid flow measurement device **100** further includes a least one rib **230** extending at a longitudinal axis **W-W'** and being disposed at a third length **"L3"** from the impeller axle **402,** particularly the center **X** of the impeller axle **402** such that the third length **"L3"** is smaller than the first length **"L1".** The at least one rib **230** exhibits an elongate structure disposed proximal to the impeller **400.** The at least one rib **230** optimizes the water flowing though the first part onto the impeller **(400)** forming some sort of a jet nozzle and thus optimizing the flow in the vicinity of the impeller **(400).**

Further, the longitudinal axis **W-W'** is substantially parallel to the longitudinal axis **Y-Y'** and the longitudinal axis **Z-Z'** and further substantially perpendicular to the central axis **X-X'.** The partition wall **224** and the at least one rib **230** are disposed substantially parallel to the longitudinal axis **Y-Y'** of the liquid channel **202.**

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Liquid Flow Measurement Device
- **200**: Housing
- **202**: Liquid Channel
- **204**: Inlet
- **206**: Outlet
- **208**: Impeller Housing
- **210**: Second Threaded Portion
- **212**: Second Peripheral Portion
- **214**: Second Mounting Portion
- **216**: Impeller Opening
- **218**: Body
- **220**: Inlet Wall
- **222**: Outlet Wall
- **224**: Partition Wall
- **226**: First End
- **228**: Second End
- **230**: Rib
- **300**: Cover
- **302**: Body Portion
- **304**: First Peripheral Portion
- **306**: Central Portion
- **308**: First Mounting Portion
- **310**: First Threaded Portion
- **400**: Impeller
- **402**: Impeller Axle
- **404**: Vanes
- **500**: Magnet
- **600**: Hall Sensor
- **X-X'**: Central Axis
- **Y-Y'**: Longitudinal Axis
- **Z-Z'**: Longitudinal Axis
- **W-W'**: Longitudinal Axis
- **X**: Center
- **L1**: First Length
- **L2**: Second Length
- **L3**: Third Length

## Claims

1. A liquid flow measurement device **(100)** comprising:
a housing **(200)** defining a liquid channel **(202),** the liquid channel **(202)** further defines an inlet **(204)** and an outlet **(206)** for a liquid flow, wherein the liquid channel **(202)** has a maximum cross-sectional area at either one of the inlet **(204)** or the outlet **(206),**
an impeller housing **(208)** defined by the housing **(200),**
an impeller **(400)** disposed within the impeller housing **(208),**
wherein the impeller **(400)** is adapted to rotate about an impeller axle **(402)** such that the impeller **(400)** at least partially extends in the liquid channel **(202),**
wherein the impeller **(400)** extends in the liquid channel **(202)** up to a first length **(L1)** from the impeller axle **(402),**
**characterized in that:**
the liquid flow measurement device **(100)** further comprises a partition wall **(224)** disposed within the liquid channel **(202)** such that the partition wall **(224)** is disposed at a second length **(L2)** from the impeller axle **(402)** such that the first length **(L1)** is smaller than or equal to the second length **(L2),**
wherein the partition wall **(224)** divides the liquid flow coming from the inlet **(204)** into a first part which is directed towards the impeller **(400),** and a second part which bypasses the impeller **(400).**

2. The liquid flow measurement device **(100)** according to any one of the preceding claims,
wherein the partition wall **(224)** comprises an elongate structure defining a first end **(226)** and a second end **(228)** such that the first end **(226)** is disposed opposite to the second end **(228),** and
wherein the first end **(226)** is disposed towards the inlet **(204)** of the liquid channel **(202)** and the second end **(228)** is disposed towards the impeller **(400).**

3. The liquid flow measurement device **(100)** according to claim **2,**
wherein the first end **(226)** of the partition wall **(224)** has a shape similar to a shape of the second end **(228)** of the partition wall **(224).**

4. The liquid flow measurement device **(100)** according to claim **2,**
wherein the first end **(226)** of the partition wall **(224)** has the shape different from the shape of the second end **(228)** of the partition wall **(224).**

5. The liquid flow measurement device **(100)** according to any one of the claims **2-4,**
wherein the impeller axle **(402)** is disposed along a central axis **(X-X')** perpendicular to a longitudinal axis **(Y-Y')** of the liquid channel **(202),** and
wherein the second end **(228)** of the partition wall **(224)** is disposed substantially beneath the central axis **(X-X')** of the impeller axle **(402).**

6. The liquid flow measurement device **(100)** according to any one of the preceding claims,
wherein the liquid flow measurement device **(100)** further comprises a at least one rib **(230)** disposed at a third length **(L3)** from the impeller axle **(402)** such that the third length **(L3)** is smaller than the first length **(L1).**

7. The liquid flow measurement device **(100)** according to claim **6,**
wherein the at least on rib **(230)** comprises an elongate structure having a length at least one-third the length of the partition wall **(224).**

8. The liquid flow measurement device **(100)** according to claim **6 or 7,**
wherein the third length **(L3)** is two-third of the second length **(L2)** relative to the impeller axle **(402).**

9. The liquid flow measurement device **(100)** according to any one of the preceding claims,
wherein the partition wall **(224)** and the at least one rib **(230)** are disposed substantially parallel to the longitudinal axis **(Y-Y')** of the liquid channel **(202).**

10. The liquid flow measurement device **(100)** according to any one of the preceding claims,
wherein the liquid flow measurement device **(100)** is configured to measure the RPM of the impeller **(400),** and
wherein the RPM of the impeller **(400)** is measured with a magnet **(500)** and a hall sensor **(600)** disposed proximal to the impeller **(400).**

11. The liquid flow measurement device **(100)** according to any one of the preceding claims,
wherein the impeller housing **(208)** is disposed at an offset to the longitudinal axis **(Y-Y')** of the liquid channel **(202).**

12. The liquid flow measurement device **(100)** according to any one of the preceding claims,
wherein the liquid channel **(202)** is surrounded by a body **(218)** having an inlet wall **(220)** defining the inlet **(204)** and an outlet wall **(222)** defining the outlet **(206),** and
wherein the inlet wall **(220)** forms a smooth contraction channel and further forms a nozzle for the first part of the liquid flow which is directed towards the impeller **(400).**

13. The liquid flow measurement device **(100)** according to claim 12,
wherein the partition wall **(224)** is disposed within the liquid channel **(202)** such that the distance between the inlet wall **(220)** and the partition wall **(224)** is in a proportional relationship to the second length **(L2).**

14. The liquid flow measurement device **(100)** according to any one of the preceding claims,
wherein the liquid flow measurement device **(100)** is formed by three plastic parts, and
wherein the three plastic parts comprises the housing **(200),** the impeller **(400),** and a cover **(300)** to shield the impeller **(400)** in the housing **(200).**

15. A pump, particularly a centrifugal pump, comprises a liquid flow measurement device **(100)** of any of the preceding claims **1** to **14.**
